(19) **Europäisches Patentamt**

**European Patent Office**

**Office européen des brevets**

(11) **EP 0 674 254 B1**

(12) **FASCICULE DE BREVET EUROPEEN**

(45) Date de publication et mention
de la délivrance du brevet:
**07.03.2001 Bulletin 2001/10**

(51) Int Cl.7: **G06F 1/02**, G06F 1/03

(21) Numéro de dépôt: **95200605.4**

(22) Date de dépôt: **14.03.1995**

(54) **Dispositif de synthèse d'une forme de signal**

Gerät zur Signalformsynthese

Apparatus for signal form synthesis

(84) Etats contractants désignés:
**DE FR GB**

(30) Priorité: **23.03.1994 FR 9403423**

(43) Date de publication de la demande:
**27.09.1995 Bulletin 1995/39**

(73) Titulaire: **Koninklijke Philips Electronics N.V.
5621 BA Eindhoven (NL)**

(72) Inventeur: **Bellanger, Maurice
F-75008 Paris (FR)**

(74) Mandataire: **Chaffraix, Jean et al
Société Civile S.P.I.D.
156, Boulevard Haussmann
75008 Paris (FR)**

(56) Documents cités:
**EP-A- 0 195 709**          **US-A- 5 014 231**

## Description

La présente invention concerne un dispositif de synthèse de fréquences, dispositif comportant un circuit numérique de génération du signal à synthétiser pour fournir une première série d'échantillons numériques représentatifs de ce signal, constitués par des mots à N éléments binaires et un circuit convertisseur numérique-analogique pour fournir ledit signal sous forme analogique.

La présente invention concerne aussi un poste émetteur et un poste récepteur comportant un tel dispositif.

Un dispositif de ce genre trouve d'importantes applications notamment pour élaborer des signaux sinusoïdaux à une fréquence donnée et pour constituer, ainsi, un synthétiseur numérique direct de fréquences. On trouvera dans le brevet des Etats Unis d'Amérique N° 5 014 231, la description d'un tel dispositif.

Une première exigence souvent imposée à ce genre de dispositif est que le signal fourni doit être d'une grande pureté et une seconde, qui en découle, est qu'il ne doit présenter aucune raie parasite. Ces raies sont provoquées principalement par la forme sinusoïdale et périodique à synthétiser. Pour satisfaire cette première exigence, il est possible de prévoir un grand nombre d'éléments binaires pour les échantillons de la première série. Par exemple, pour obtenir une sinusoïde ayant une pureté de 84 dB, il faut que les échantillons de sortie du circuit de génération de forme aient 14 éléments binaires. Ceci découlant de la formule :

$$N_b \geq R / 6$$

où

    $N_b$ est le nombre d'éléments binaires et
    R est le rapport en décibel entre le niveau de la sinusoïde et de ceux des raies parasites.

Se pose alors, lorsqu'on veut utiliser ce genre de dispositif pour de hautes fréquences, par exemple de l'ordre de quelques centaines de mégahertz, le problème de trouver un circuit convertisseur numérique-analogique peu coûteux. Pour satisfaire la seconde exigence, le brevet précité propose d'ajouter un nombre aléatoire aux échantillons de la première série. Si, de cette façon on abaisse le niveau de ces raies, c'est au détriment d'une dégradation générale de la pureté du signal et l'on ne peut éviter la présence d'un convertisseur numérique-analogique coûteux.

L'invention se propose d'éviter l'utilisation d'un circuit convertisseur numérique-analogique traitant un grand nombre d'éléments binaires.

Pour cela, un tel dispositif est remarquable en ce qu'il est prévu un montage pour filtrer selon une caractéristique passe-bande les échantillons de la première série et pour fournir audit circuit convertisseur numérique-analogique une seconde série d'échantillons, dérivés des échantillons de la première série, constitués par des mots à N' éléments binaires où N ≥ N' et en ce qu'il est prévu une boucle de contre-réaction pour soustraire aux échantillons de la première série les échantillons de la seconde série.

La description suivante en regard des dessins ci-annexés, le tout donné à titre d'exemple non limitatif, fera bien comprendre comment l'invention peut être réalisée.

- La figure 1 montre un schéma de réalisation de l'invention.
- Les figures 2a et 2b montrent l'allure des échantillons de la première et de la seconde série.
- La figure 3 montre le schéma fonctionnel du dispositif de l'invention montré à la figure 1.
- La figure 4 montre un mode de réalisation avantageux d'un dispositif conforme à l'invention.
- Les figures 5a et 5b montrent un poste émetteur et un poste récepteur comportant un tel dispositif.

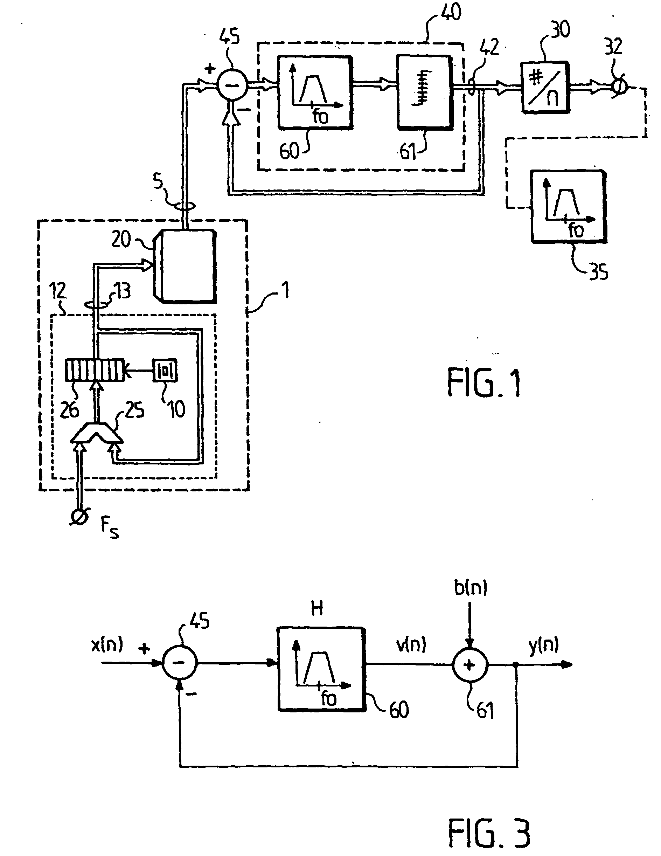

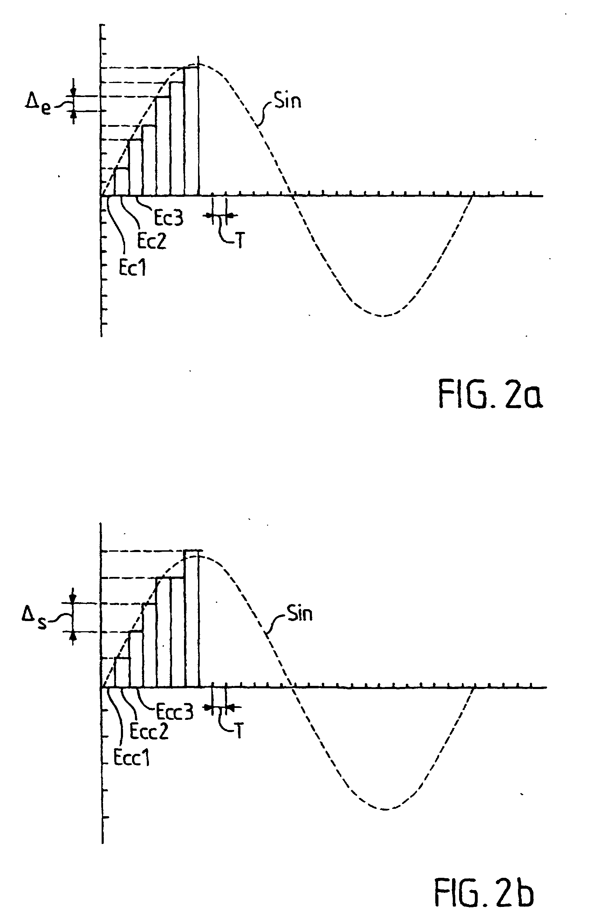

A la figure 1, la référence 1 indique un circuit de génération numérique. Ce circuit fournit à sa sortie 5 une première série d'échantillons numériques Ec1, Ec2, Ec3, ..., représentant une sinusoïde Sin telle que représentée à la figure 2a. Ces échantillons sont des mots à N éléments binaires, par exemple N = 16, et sont fournis à la cadence d'un circuit d'horloge 10. Ce circuit 1 comporte, selon le mode de réalisation montré à la figure 1, un accumulateur 12 dont la sortie 13 est reliée à l'entrée d'adressage d'une mémoire 20. L'accumulateur est formé, de la manière habituelle, d'un organe d'addition 25 dont la sortie est reliée à un registre 28. La sortie de ce registre constitue la sortie de l'accumulateur et elle est reliée, en outre, à une première entrée de l'organe 25. La deuxième entrée de cet organe reçoit l'indication, sous forme numérique, de la fréquence à synthétiser $F_s$. Cette fréquence peut varier selon des pas $\Delta F_s$ en fonction de l'utilisation souhaitée. L'entrée de ce registre est reliée à la sortie de l'organe 25 et sa commande de chargement à la sortie du circuit d'horloge 10. Les échantillons à la sortie 5 après un traitement, que l'invention propose, sont appliqués à l'entrée d'un circuit convertisseur numérique-analogique 30 qui fournit à la sortie 32 un signal sinusoïdal. Ce signal ne présente pas de signaux parasites difficiles à supprimer par un filtre passe-bande 35 de type analogique pour lequel aucune contrainte délicate n'est imposée.

Conformément à l'invention le circuit convertisseur numérique-analogique 30 traite une seconde série d'échantillons de mots binaires à N' éléments binaires, par exemple N' = 12, dérivés des échantillons de la première série. Il est prévu un montage 40 pour fournir à sa sortie 42 reliée au circuit convertisseur 30 des échantillons filtrés et tronqués dans leur nombre d'éléments binaires. Il est prévu aussi une contre-réaction formée à partir d'un organe de soustraction 45 qui soustraît aux échantillons de la première série qui surgissent à la sortie 5 les échantillons de la seconde série qui surgissent à la sortie 42 dudit montage 40.

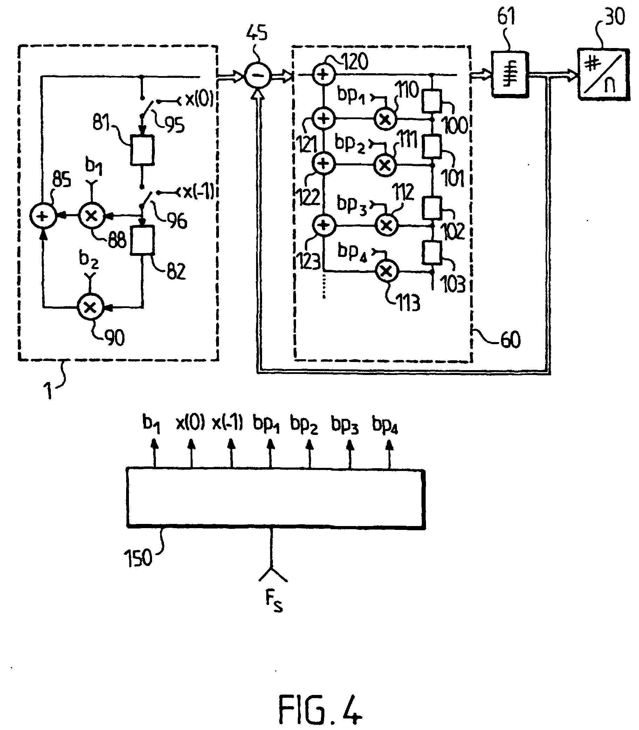

Le montage 40 est formé tout d'abord d'un filtre numérique 60 dont un exemple de réalisation est montré à la figure 4 et d'un organe de troncature 61 qui réduit le nombre d'éléments binaires des mots appliqués à son entrée. Ceci est figuré de façon schématique à la figure 2b dont les graduations $\Delta$s sur l'axe vertical sont bien plus espacées que les graduations $\Delta$e de la figure 2a. Ecc1, Ecc2, Ecc3, ..., sont les échantillons établis selon cette nouvelle graduation pour définir la sinusoïde Sin. L'organe 61 peut être réalisé au moyen d'une mémoire morte ou tout simplement en négligeant les éléments binaires de plus faible poids. Le filtre 60 est centré autour d'une fréquence fo qui est la valeur moyenne de la variation de $F_s$.

La figure 3 est un diagramme destiné à l'explication du dispositif de l'invention. Les grandeurs en jeu sont des variables échantillonnées à la cadence de T où T est la période d'échantillonnage fixée par l'horloge 10, et on les considère à l'instant "n". Ainsi, x(n) représente l'échantillon à la sortie 5, v(n) est l'échantillon à la sortie du filtre 60 et y(n) est l'échantillon à la sortie 42 montage 40. Sur ce diagramme, sont seuls représentés les éléments nécessaires pour cette explication. On notera que l'organe de troncature 61 est représenté par un additionneur de bruit b(n) au signal v(n) à la sortie du filtre 60. Ce bruit b(n) représente l'erreur faite par l'organe de troncature sur des échantillons à plus grand nombre d'éléments binaires. En prenant les transformées en Z de ces grandeurs X(Z), V(Z) et Y(Z) et en faisant intervenir la fonction de transfert en Z du filtre 60 qui s'écrit H(Z), on établit les relations suivantes :

$$V(Z) = [X(Z) - Y(Z)]H(Z)$$

$$Y(Z) = V(Z) + B(Z)$$

ce qui finalement donne :

$$Y(Z) = \frac{X(Z)H(Z)}{1+H(Z)} + \frac{B(Z)}{1 + H(Z)}$$

Cette dernière formule montre que si H(Z) a un grand module alors Y(Z) devient proche de X(Z) tandis que la contribution de B(Z) est amoindrie de la valeur du module de H(Z).

Il va de soi que les erreurs apportées par l'organe de troncature existent toujours mais que leur spectre est rejeté hors de la bande passante du filtre de sorte que le filtre analogique 35 peut alors facilement rejeter ces composantes parasites.

La figure 4 montre un mode réalisation préféré de l'invention.

Dans ce mode de réalisation, le circuit numérique de génération 1 est un circuit résonateur numérique. Il est formé de deux éléments à retard 81 et 82 montés en cascade. L'entrée de l'élément 81 est connectée à la sortie d'un organe d'addition 85 qui constitue celle du circuit 1. L'organe d'addition 85 reçoit le résultat de deux organes de multiplication 88 et 90 qui multiplient respectivement par $b_1$ et par $b_2$ les échantillons à la sortie des éléments 81 et 82. Deux commutateurs 95 et 96 permettent d'appliquer des valeurs initiales aux entrées des éléments 81 et 82. Il est facile de montrer qu'un tel circuit oscille à une fréquence $F_s$ qui est définie par la valeur $b_1$ qui donne l'accord de la fréquence d'accord :

$$\cos 2\pi F_s T = + b_1/2$$

$$b_2 = - 1$$

Pour s'assurer d'une bonne stabilité de l'onde numérique fournie, on réinitialise ce circuit, avec une période Ti, par les valeurs suivantes, en agissant sur les commutateurs 95 et 96 (Ti a une valeur de l'ordre de la seconde et est choisie pour éviter toute discontinuité intempestive) :

$$x(0) = A$$

$$x(-1) = A \cos 2\pi F_s T$$

où A est une constante définissant l'amplitude de l'onde.

La figure 4 montre aussi une structure possible du filtre numérique 60. C'est une structure de filtre purement récursif formée d'une pluralité d'éléments de retard 100, 101, 102, 103,... connectée à la sortie du filtre. Les signaux aux sorties de ces éléments de retard sont multipliés par différents coefficients $bp_1$, $bp_2$, $bp_3$, $bp_4$,... au moyen d'organes de multiplication 110, 111, 112, 113,.... Une série d'organes d'addition 120 à 123... additionnent au signal d'entrée tous les signaux à la sortie des organes 110, 111, 112, 113,...

La valeur de ces différents coefficients $bp_1$, $bp_2$, $bp_3$, $bp_4$,.. dépend de la fréquence $F_s$ à synthétiser et de la pureté spectrale à obtenir. Ces valeurs déterminent la caractéristique de filtrage. On trouvera dans l'ouvrage : "TRAITEMENT NUMERIQUE DU SIGNAL" de M. BELLANGER paru aux éditions Masson toutes indications pour la réalisation de ce filtre ainsi que d'autres structures possibles et non forcément purement récursives.

Un organe de conversion 150 assure les changements des différentes valeurs $b_1$, $bp_1$, $bp_2$, $bp_3$, $bp_4$, x(0) et x(1) en fonction de la valeur $F_s$ à synthétiser.

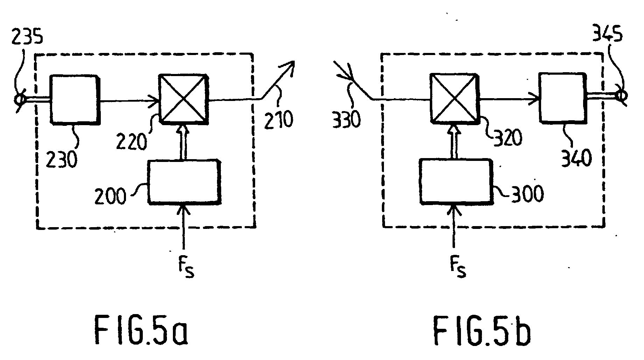

La figure 5 montre en <u>a</u> un poste émetteur

comportant un dispositif de synthèse 200 conforme à l'invention. Le dispositif 200 est utilisé pour fixer la fréquence porteuse du signal à émettre sur l'antenne 210. Un modulateur 220 module cette fréquence en fonction d'informations fournies par un circuit de traitement 230 recevant sur une borne 235 les informations utiles à transmettre.

La figure 5 montre en <u>b</u> un poste récepteur comportant un dispositif de synthèse 300 conforme à l'invention. Le dispositif 300 sert d'oscillateur local pour démoduler ou charger, au moyen d'un circuit 320, la fréquence de l'onde reçue par l'antenne 330. Un circuit de traitement 340 établit l'information pour l'utilisateur sur une borne 345.

## Revendications

1. Dispositif de synthèse de fréquences, dispositif comportant un circuit numérique de génération du signal à synthétiser pour fournir une première série d'échantillons numériques représentatifs de ce signal, constitués par des mots à N éléments binaires et un circuit convertisseur numérique-analogique pour fournir ledit signal sous forme analogique, caractérisé en ce qu'il est prévu un montage pour filtrer selon une caractéristique passe-bande les échantillons de la première série et pour fournir audit circuit convertisseur numérique-analogique une seconde série d'échantillons constitués par des mots à N' éléments binaires, dérivés des échantillons de la première série, où $N \geq N'$ et en ce qu'il est prévu une boucle de contre-réaction pour soustraire aux échantillons de la première série les échantillons de la seconde série.

2. Dispositif de synthèse de fréquences selon la revendication 1, caractérisé en ce que le circuit numérique de génération de signal est constitué à partir d'une mémoire contenant les échantillons numériques adressée par un code définissant la fréquence à synthétiser.

3. Dispositif de synthèse de fréquences selon la revendication 1, caractérisé en ce que le circuit numérique de génération de signal est constitué à partir d'un circuit résonateur numérique formé d'au moins un élément de retard et d'un organe d'addition pour sommer des échantillons aux entrées et aux sortie desdits éléments pondérés par des valeurs de pondération d'accord.

4. Dispositif de synthèse de fréquences selon l'une des revendications 1 à 3, caractérisé en ce que le montage en cascade comporte un filtre numérique récursif formé d'au moins un élément de retard et d'un organe d'addition pour sommer des échantillons aux entrées et aux sorties desdits éléments pondérés par des valeurs de pondération de filtrage.

5. Dispositif de synthèse de fréquences selon les revendications 3 et 4, caractérisé en ce qu'il est prévu un circuit de réglage qui fournit les valeurs de pondération d'accord et de filtrage en fonction de la fréquence à synthétiser.

## Claims

1. A frequency synthesizer apparatus, which apparatus comprises a digital generator circuit for producing a first series of digital samples which are representative of the signal to be synthesized and are formed by binary words of N bits, and a digital-to-analog converter circuit for producing said signal in analog form, characterized in that an assembly is provided for filtering in accordance with a band-pass characteristic curve the samples of the first series and for supplying to said digital-to-analog converter circuit a second series of samples formed by binary words of N' bits, where $N \geq N'$, and in that a negative feedback loop is provided for subtracting the samples of the second series from the samples of the first series.

2. A frequency synthesizer apparatus as claimed in Claim 1, characterized in that the digital signal generator circuit is formed by a memory containing the digital samples addressed by a code which defines the synthesis frequency.

3. A frequency synthesizer apparatus as claimed in Claim 1, characterized in that the digital signal generator circuit is formed by a digital resonator circuit constituted by at least one delay element and one adder element for summing samples at the inputs and outputs of said elements weighted by tuning weight values.

4. A frequency synthesizer apparatus as claimed in one of the Claims 1 to 3, characterized in that the cascaded assembly comprises a recursive digital filter formed by at least one delay element and one adder element for summing the samples at the inputs and outputs of said elements weighted by filter weight values.

5. A frequency synthesizer apparatus as claimed in the Claims 3 and 4, characterized in that the control circuit is provided which produces the tuning and filter weight values as a function of the synthesis frequency.

**Patentansprüche**

1. Frequenzsynthesizeranordnung, wobei diese Schaltungsanordnung eine digitale Synthesizersignalerzeugungsanordnung aufweist zum Erzeugen einer ersten Reihe digitaler Abtastwerte, die für das zu synthetisierende Signal repräsentativ sind und durch binäre Wörter von N Bits gebildet werden, sowie einen Digital-Analog-Wandler zum Erzeugen des genannten Signals in analoger Form, dadurch gekennzeichnet, dass eine Anordnung vorgesehen ist zum Filtern der Abtastwerte der ersten Reihe entsprechend einer Bandpasskurve und zum Liefern einer zweiten Reihe von Abtastwerten, die von den Abtastwerten der ersten Reihe hergeleitet sind, zu dem genannten Digital-Analog-Wandler, wobei diese Abtastwerte durch binäre Wörter von N' Bits gebildet sind, wobei $N \geq N'$ ist, und dass zum Subtrahieren der Abtastwerte der zweiten Reihe von den Abtastwerten der ersten Reihe eine negative Rückkopplungsschleife vorgesehen ist.

2. Frequenzsynthesizeranordnung nach Anspruch 1, dadurch gekennzeichnet, dass die digitale Signalerzeugungsanordnung durch einen Speicher mit den digitalen Abtastwerten gebildet ist, die durch einen Code adressiert sind, der die Synthesizerfrequenz definiert.

3. Frequenzsynthesizeranordnung nach Anspruch 1, dadurch gekennzeichnet, dass die digitale Signalerzeugungsanordnung durch eine digitale Resonatorschaltung gebildet ist, die durch wenigstens ein Verzögerungselement und ein Addierelement gebildet ist zum Summieren von Abtastwerten an den Eingängen und Ausgängen der genannten Elemente, gewichtet durch Abstimmung von Gewichtungswerten.

4. Frequenzsynthesizeranordnung nach einem der Ansprüche 1 bis 3, dadurch gekennzeichnet, dass die kaskadengeschaltete Anordnung ein rekursives digitales Filter aufweist, gebildet durch wenigstens ein Verzögerungselement und ein Addierelement zum Summieren der Abtastwerte an den Eingängen und Ausgängen der genannten Elemente, gewichtet durch Filtergewichtungswerte.

5. Frequenzsynthesizeranordnung nach Anspruch 3 und 4, dadurch gekennzeichnet, dass die Steuerschaltung vorgesehen ist, welche die Abstimm- und Filtergewichtungswerte erzeugt als Funktion der Synthesizerfrequenz.

FIG. 1

FIG. 3

FIG. 2a

FIG. 2b

EP 0 674 254 B1

FIG.4

8

FIG.5a

FIG.5b